# FASCICULE DE BREVET EUROPEEN

(11) **EP 3 067 766 B1**
(45) Date de publication et mention de la délivrance du brevet: **01.01.2020**
(21) Numéro de dépôt: 16159558.2
(22) Date de dépôt: 10.03.2016
(51) Int. Cl.: G05B 19/4069

(54) **PROCEDE DE GENERATION D'UN PROGRAMME D'USINAGE**
VERFAHREN ZUR ERZEUGUNG EINES BEARBEITUNGSPROGRAMMS
METHOD FOR GENERATING A MACHINING PROGRAM

(30) Priorité: 10.03.2015 FR 1551995
(43) Date de publication de la demande: 14.09.2016
(73) Titulaire: Spring Technologies, 93100 Montreuil (FR)
(72) Inventeur: LEGOUPI, Philippe, 94500 CHAMPIGNY SUR MARNE (FR); BELLATON, Olivier, 93340 Le Raincy (FR)
(74) Mandataire: Decorchemont, Audrey Véronique Christèle

(56) Documents cités:
- US-A1- 2012 283 862

## Description

### ARRIERE PLAN DE L'INVENTION

Il est connu par exemple du document brevet EP 1 548 529, une machine-outil à commande numérique.

Une machine-outil à commande numérique comporte :
- plusieurs parties mobiles les unes par rapport aux autres ;
- une pluralité d'actionneurs agencés pour générer un déplacement relatif entre ces parties mobiles;
- une de ces parties mobiles forme un porte outil adapté à porter un outil réel, aussi appelée outil d'usinage ;
- une autre de ces parties mobiles forme un support pour maintenir des moyens de maintien en position d'un brut réel de pièce à usiner, la machine outil formant une chaine cinématique s'étendant entre le porte outil et la partie mobile formant le support pour maintenir les moyens de maintien en position du brut de pièce à usiner ;
- une pluralité de capteurs pour générer des données de positionnement représentatives d'une position courante du porte outil par rapport à un référentiel machine réel ;
- un contrôleur physique adapté pour interpréter un programme d'usinage et en fonction de cette interprétation à commander à la pluralité d'actionneurs de déplacer le porte outil par rapport aux moyens de maintien en position du brut réel pour ainsi pouvoir déplacer l'outil réel porté par le porte outil vis-à-vis du brut réel et pour ainsi usiner ce brut réel en fonction d'instructions contenues dans le programme d'usinage.

La génération d'un programme d'usinage sans défaut est indispensable pour pouvoir usiner une pièce conforme à un plan.

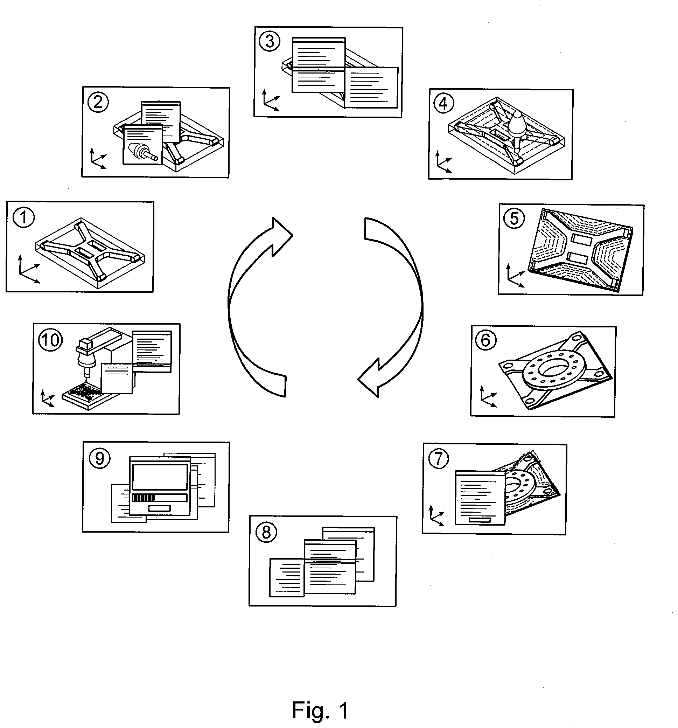

Traditionnellement, on génère le programme d'usinage en suivant un processus complexe illustré à la figure 1 et comportant la succession d'étapes suivantes.

A l'étape 1, à l'aide d'un logiciel de conception assistée par ordinateur, on génère un fichier modélisant, en trois dimensions, la pièce à usiner ;

A l'étape 2, on transfère ce fichier modélisant la pièce à un logiciel de fabrication assistée par ordinateur et on choisit un premier outil virtuel que l'opérateur considère adapté pour pouvoir usiner au moins une première des entités géométriques de la pièce modélisée dans le fichier. Par exemple si l'opérateur souhaite réaliser un perçage, l'outil virtuel sera un foret d'une longueur virtuelle donnée et d'un diamètre virtuel donné, s'il souhaite réaliser un surfaçage, l'outil virtuel est une fraise, s'il souhaite réaliser une pièce de révolution, l'outil virtuel sera un outil de tournage.

A l'étape 3, l'opérateur délimite des entités géométriques de la pièce modélisée à réaliser et il associe à chaque entité géométrique une stratégie d'usinage qui peut être une stratégie de perçage, de surfaçage, de tournage ou autre. Chaque stratégie d'usinage est associée à un outil virtuel qui a été choisi à l'étape 2 et à des conditions de fonctionnement dans lesquelles l'outil virtuel doit être utilisé pour qu'il puisse couper correctement la matière du brut usiné (vitesse de coupe maximale, la profondeur de passe maximale, sa vitesse d'avance maximale...).

A l'étape 4, conformément à la stratégie d'usinage préparée à l'étape 3 qui comprend un outil virtuel choisi à l'étape 2, le logiciel de fabrication assistée par ordinateur détermine une première trajectoire virtuelle de l'outil virtuel. Cette première trajectoire de l'outil virtuel est telle que l'outil virtuel puisse, en suivant cette première trajectoire, usiner l'entité géométrique délimité par l'utilisateur à l'étape 3.

A l'étape 5, toujours à l'aide du logiciel de fabrication assistée par ordinateur, l'utilisateur recommence les étapes 2 à 4 pour définir un ensemble des trajectoires virtuelles de tous les outils virtuels nécessaires pour usiner virtuellement l'ensemble des entités géométriques qui définissent les formes de la pièce à usiner (une forme de la pièce à usiner peut être composée de plusieurs entités géométriques).

A l'étape 6, l'utilisateur simule, en trois dimensions, l'enlèvement de matière résultant de l'ensemble des trajectoires virtuelles d'outils virtuels définies aux étapes 2 à 5. Le résultat de cette simulation est une forme simulée représentant brut virtuel usiné par déplacement des outils virtuels le long de leurs trajectoires virtuelles respectives. Si l'écart entre cette forme simulée à l'aide du logiciel de fabrication assistée par ordinateur et la pièce modélisée à l'aide du logiciel de conception assistée par ordinateur est acceptable, c'est-à-dire dans les tolérances de définition de la pièce modélisée alors il commande manuellement, au logiciel de fabrication assistée par ordinateur, la génération d'un fichier récapitulant un ensemble de trajectoires virtuelles validées et d'outils virtuels validés, puis il passe à l'étape 7. Dans le cas contraire, on peut soit reconcevoir la pièce en reprenant le processus depuis l'étape 1 jusqu'à l'étape 6 jusqu'à ce que l'on ait un écart acceptable entre la forme simulée et la pièce modélisée pour pouvoir générer le fichier récapitulatif et passer à l'étape 7. L'utilisateur peut aussi décider de modifier le processus en modifiant certains au moins des choix réalisés aux étapes 2 à 6. Par exemple, il peut modifier les choix d'outils virtuels et/ou d'entités géométriques et/ou de stratégies d'usinage et/ou de trajectoires virtuelles. L'opérateur modifie ces choix et réalise autant de simulations de formes simulées que nécessaire, jusqu'à ce que l'écart entre forme simulée et pièce modélisé soit considéré comme acceptable, l'utilisateur génère alors le fichier récapitulatif et passe à l'étape 7.

A l'étape 7, l'utilisateur transfère le fichier récapitulant l'ensemble de trajectoires virtuelles et d'outils virtuels validés vers un post-processeur qui est programmé pour déterminer des trajectoires de liaison destinées à relier entre elles des trajectoires virtuelles de l'ensemble de trajectoires virtuelles qui se succèdent. A partir de ces trajectoires de liaison et des trajectoires virtuelles nécessaires générer la forme simulée de la pièce virtuelle, le post-processeur génère un programme d'usinage sous forme de fichier texte supposé interprétable directement par le contrôleur physique de la machine-outil cible sur laquelle on veut usiner le brut de pièce.

A l'étape 8, le programme d'usinage supposé interprétable par le contrôleur physique de la machine-outil est enregistré et, comme décrit précédemment, il peut alors être envoyé vers la machine-outil afin d'y être interprété et exécuté au ralenti et testé sur la machine-outil réelle. Si le programme d'usinage est erroné il y a un risque pour que le contrôleur physique l'interprète et commande aux actionneurs de réaliser des déplacements qui peuvent conduire à un usinage non conforme du brut réel et/ou à une casse de la machine-outil, par exemple par collision de l'outil réel ou du porte outil avec l'une des pièces mobiles de la machine ou avec les moyens de maintien du brut réel. L'exécution au ralenti du programme d'usinage avec des moyens de maintien de brut réel vides de tout brut réel ou portant un faux brut réel de faible coût permet à l'opérateur de détecter des défauts d'usinage puis interrompre cet usinage puis rectifier le programme d'usinage. Le programme d'usinage rectifié peut à son tour être exécuté au ralenti. Ce processus itératif de détection de défauts d'usinage est couteux à mettre en œuvre.

A l'étape 9, alternativement au test sur machine-outil réelle mentionné à l'étape 8, le programme d'usinage supposé interprétable par le contrôleur physique de la machine-outil est envoyé vers une machine-outil virtuelle simulant le fonctionnement réel de la machine-outil cible sur laquelle on veut usiner le brut de pièce. Un contrôleur virtuel de la machine-outil virtuel qui simule le fonctionnement du contrôleur physique de la machine-outil cible est alors activé pour interpréter le programme d'usinage supposé interprétable. Si cette interprétation fonctionne, on passe alors à l'étape 10 d'exécution du programme d'usinage sur la machine-outil virtuelle comprenant un contrôleur virtuel. En cas d'échec d'interprétation, l'opérateur doit alors identifier la raison supposée de cet échec d'interprétation et revenir corriger des paramètres dans l'une des étapes précédentes 7 à 8. Il peut par exemple changer de version de post-processeur s'il considère qu'elle n'est pas compatible avec la machine-virtuelle, ou alors changer de version de machine-virtuelle ou de contrôleur virtuel.

A l'étape 10, l'opérateur exécute le programme d'usinage interprété par le contrôleur virtuel de la machine-outil virtuelle et visualise, par une représentation en trois dimensions, un usinage virtuel sur cette machine-outil virtuelle, conforme au programme d'usinage interprété par le contrôleur virtuel. Cette visualisation permet à l'opérateur de détecter des défauts d'usinage virtuel qu'il souhaite ne pas retrouver lors de l'usinage réel. A chaque défaut constaté durant l'usinage virtuel, l'opérateur recherche une cause potentielle d'origine du défaut puis il recommence alors certaines au moins des étapes 1 à 9 du processus en modifiant des paramètres qu'il considère comme responsables de l'échec d'exécution de l'usinage-virtuel.

Ce processus allant des étapes 1 à 10 nécessite un grand nombre de logiciels (conception assistée par ordinateur, fabrication assistée par ordinateur, pos-processeur, logiciel de simulation de fonctionnement d'une machine-outil en réponse à l'exécution d'un programme d'usinage...) et de nombreux types de fichiers dans différents formats et langages pour échanger des données entre ces logiciels. La complexité de ce processus rend très difficile la génération d'un programme d'usinage interprétable et exécutable par une machine-outil réelle et permettant d'obtenir une pièce usinée conforme tout en minimisant le risque de casse machine ou de casse outil. Les documents US 2012/0283962 A1 et US 2014/0163720 A1 décrivent un tel processus.

### OBJET DE L'INVENTION

Un objet de la présente invention est de fournir un procédé de génération de programme d'usinage interprétable par un contrôleur physique d'une machine-outil à commande numérique.

### RESUME DE L'INVENTION

A cette fin, il est proposé selon l'invention un procédé de génération d'un programme d'usinage interprétable par un contrôleur physique d'une machine-outil à commande numérique, cette machine-outil comprenant plusieurs parties mobiles les unes par rapport aux autres de manière à déplacer un outil réel vis-à-vis d'un brut réel de pièce à usiner, l'outil réel étant porté par une des parties mobiles de la machine et le brut réel étant porté par une autre des parties mobiles de la machine via des moyens de maintien en position du brut réel. Le procédé de génération de programme d'usinage selon l'invention étant essentiellement caractérisé en ce que le programme d'usinage est généré à partir :
- d'un ensemble préenregistré de paramètres machine représentatifs de la machine-outil, certains de ces paramètres machine étant représentatifs de volumes d'encombrement chaque volume d'encombrement étant représentatif d'au moins une desdites parties mobiles de la machine-outil et d'autres paramètres machine étant représentatifs de liaisons cinématiques entre certaines au moins desdites parties mobiles de la machine ; et
- d'un ensemble préenregistré de séquences d'usinage, chaque séquence d'usinage étant représentative d'un déplacement attendu de l'outil réel au cours d'une partie de l'usinage d'une pièce ;
le procédé de génération du programme d'usinage étant en outre caractérisé en ce qu'à partir de certains au moins desdits paramètres machine et de certaines au moins des séquences d'usinage, un programme de simulation informatique réalise des tests de faisabilité d'usinage, le programme d'usinage étant généré dans un format exécutable par ledit contrôleur physique uniquement en cas de réussite préalable des tests de faisabilité d'usinage.

Les tests de faisabilité d'usinage sont mis en œuvre par un programme de simulation informatique utilisant :
- les séquences d'usinage pour déterminer un parcours attendu simulé de l'outil d'usinage sur l'ensemble de l'usinage ;
- les paramètres machine qui représentent les volumes d'encombrement des parties mobiles de la machine ; et
- les paramètres machine qui représentent les liaisons cinématiques entre ces parties mobiles.

Le parcours attendu simulé de l'outil d'usinage représente le déplacement attendu de l'outil d'usinage réel déplacé en suivant ces séquences d'usinage.

Sachant qu'une des parties de la machine-outil forme un porte outil et qu'une autre des parties de la machine outil porte des moyens de maintien d'un brut réel de pièce à usiner et connaissant les liaisons cinématiques entre les parties mobiles de la machine, le programme de simulation informatique simule les déplacements des volumes d'encombrement représentatifs des parties mobiles de la machine outil qui sont nécessaires pour déplacer l'outil d'usinage suivant ces séquences d'usinage, c'est-à-dire suivant le parcours attendu simulé de l'outil d'usinage réel, ce qui permet l'usinage de la pièce.

En fonction de règles de tests prédéterminées, le programme de simulation informatique vérifie s'il y a réussite des tests de faisabilité d'usinage. En cas de réussite, ce programme de simulation informatique autorise la génération du programme d'usinage dans un format exécutable par ledit contrôleur physique. En cas d'échec à l'un au moins de ces tests de faisabilité d'usinage, le programme de simulation informatique interdit la génération dudit programme d'usinage dans le format exécutable par le contrôleur physique.

En réponse à l'autorisation générée par le programme de simulation informatique réalisant les tests de faisabilité, au moins un premier algorithme d'écriture génère un préprogramme d'usinage dans un format générique puis ce préprogramme d'usinage dans le format générique est réécrit sous la forme d'un préprogramme d'usinage dans le format exécutable par le contrôleur physique. Si ce préprogramme d'usinage est considéré comme correct dans la syntaxe propre au format exécutable par le contrôleur physique alors ce préprogramme d'usinage au format exécutable est enregistrée pour être considéré comme formant le programme d'usinage au format exécutable par le contrôleur physique.

De manière générale, le programme d'usinage au format exécutable par le contrôleur physique est toujours généré en fonction de l'ensemble préenregistré de paramètres machine et de l'ensemble préenregistré de séquences d'usinage.

Dans le mode préférentiel de l'invention passant par les préprogrammes d'usinage, c'est le préprogramme d'usinage dans le format générique qui est généré en fonction de l'ensemble préenregistré de paramètres machine et en fonction de l'ensemble préenregistré de séquences d'usinage. Le préprogramme au format exécutable et le programme d'usinage au format exécutable sont par conséquent aussi générés en fonction de l'ensemble préenregistré de paramètres machine et de l'ensemble préenregistré de séquences d'usinage.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 représente un procédé de génération de programme d' usinage conforme à l'art antérieur ;

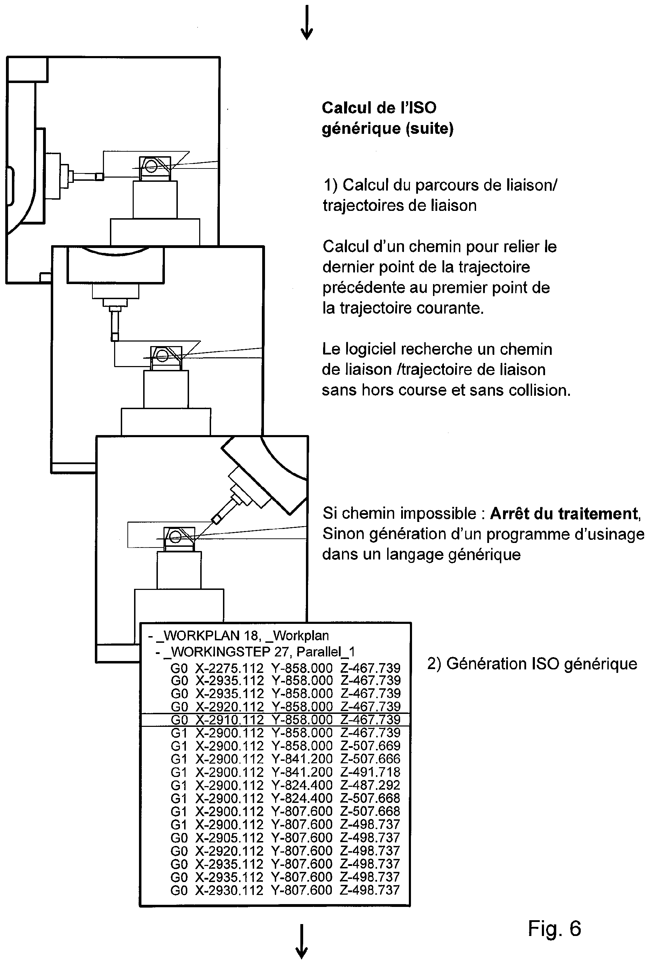

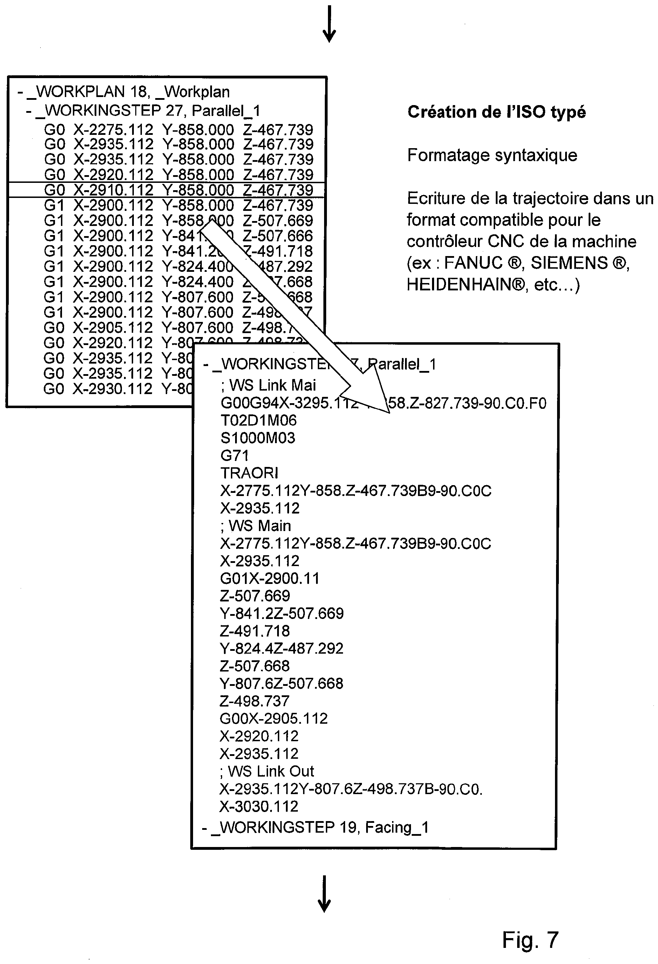

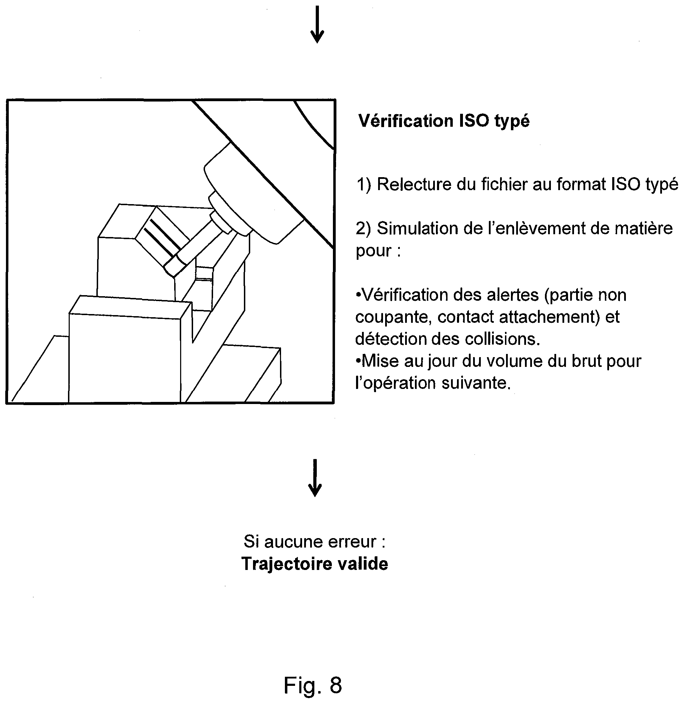

- la figure 2 présente le procédé de génération de programme selon l'invention dans son ensemble, les figures 3a à 8 illustrant des parties de ce procédé selon l'invention ;
- les figures 3a et 3b illustrent l'opération de posage d'un modèle virtuel de pièce et d'un modèle virtuel de brut sur des moyens de maintien en position du brut réel mentionnée à la figure 2 ;
- la figure 4 illustre l'opération de génération des séquences d'usinage, à partir de l'outil, du modèle de la pièce à obtenir et de stratégies d'usinage définissant des caractéristiques de l'outil et des paramètres de coupe qui lui sont propres ;
- la figure 5 illustre l'intégration du modèle représentatif de l'outil réel et du modèle virtuel représentatif de la pièce à usiner dans l'environnement machine afin de réaliser des tests de faisabilité d'usinage réalisés préalablement à la génération du programme d'usinage exécutable par le contrôleur physique ;
- la figure 6 illustre le calcul des trajectoires de liaison et un test de faisabilité cinématique du parcours attendu simulé de l'outil au cours de l'usinage, on voit sur cette figure 6 qu'en cas de réussite des tests de faisabilité, on génère un préprogramme en code ISO générique, non spécifique au format exécutable par le contrôleur physique cible ;
- la figure 7 illustre la génération du programme d'usinage dans le format exécutable à partir du préprogramme dans le format générique ;
- la figure 8 illustre un test de validité syntaxique des préprogrammes en formats générique et exécutable afin d'autoriser ou non la génération du programme d'usinage validé, interprétable et exécutable par le contrôleur physique cible, on considère que la trajectoire définie sera valide.

### DESCRIPTION DETAILLEE DE L'INVENTION

De manière générale, dans la présente demande :
- l'abréviation CN désigne le terme machine outil à commande numérique ;
- le terme ISO générique désigne le préprogramme d'usinage dans le format générique ;
- le terme ISO typé désigne le préprogramme d'usinage dans le format exécutable par le contrôleur physique.

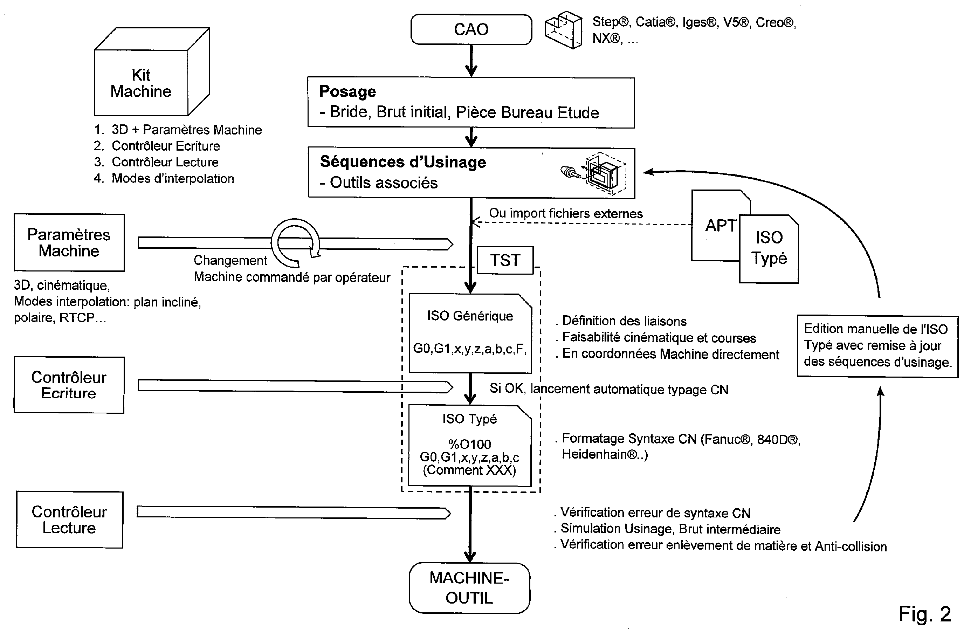

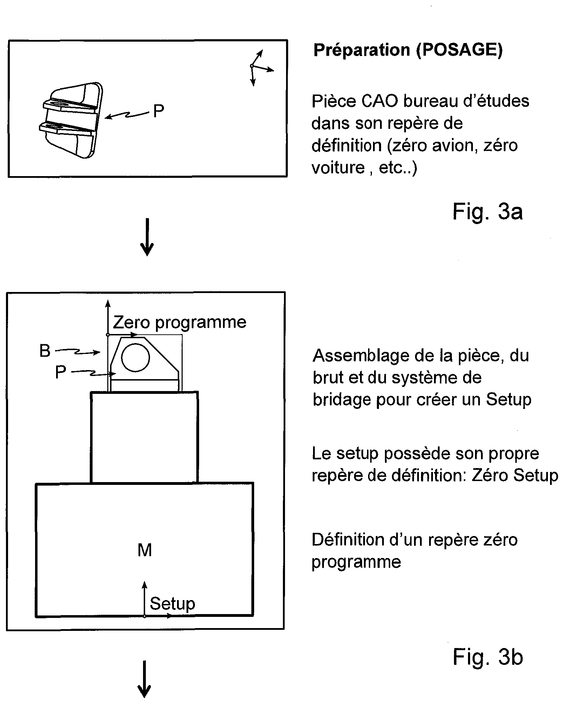

L'opération de posage présentée à la figure 2 et détaillée à travers les figures 3a et 3b. Cette opération de posage le consiste à positionner le modèle de pièce à usiner (visible à la figure 3a avec son propre repère) tel que déterminé par le bureau d'étude à l'aide du logiciel de conception assistée par ordinateur vis-à-vis d'un volume d'encombrement représentant de moyens de maintien en position du brut réel et vis-à-vis d' un volume d' encombrement représentatif d'une pièce mobile de la machine outil cible, c'est-à-dire de la machine outil sur laquelle on souhaite usiner cette pièce conformément au modèle déterminé par le logiciel de conception (visible à la figure 3b).

Lors de cette opération dite de posage on utilise un setup c'est-à-dire une fixation relative virtuelle du volume d'encombrement représentatif de la pièce à usiner vis-à-vis des moyens de maintien en position du brut réel.

Ce setup/ assemblage virtuel du modèle de pièce avec le modèle de moyens de positionnement de brut est enregistré avec son propre repère.

Cet enregistrement illustre également, un modèle représentatif du brut initial à usiner pour former la pièce et la pièce usinée attendue ainsi que les moyens de positionnement, c'est-à-dire les brides permettant de maintenir le brut avant usinage et la pièce qu'il devient en fin d'usinage.

Comme on le voit à la figure 2, cet enregistrement représente un l'assemblage virtuel utile pour déterminer les séquences d'usinage nécessaires pour passer, à l'aide de l'outil associé d'usinage, du brut à la pièce usinée finale.

Après avoir délimité des entités géométriques de la pièce modélisée à réaliser, l'opérateur choisi l'outil virtuel d'usinage représentatif d'un outil réel d'usinage cet outil virtuel étant destiné à simuler un usinage d'au moins une entité géométrique de la pièce modélisée.

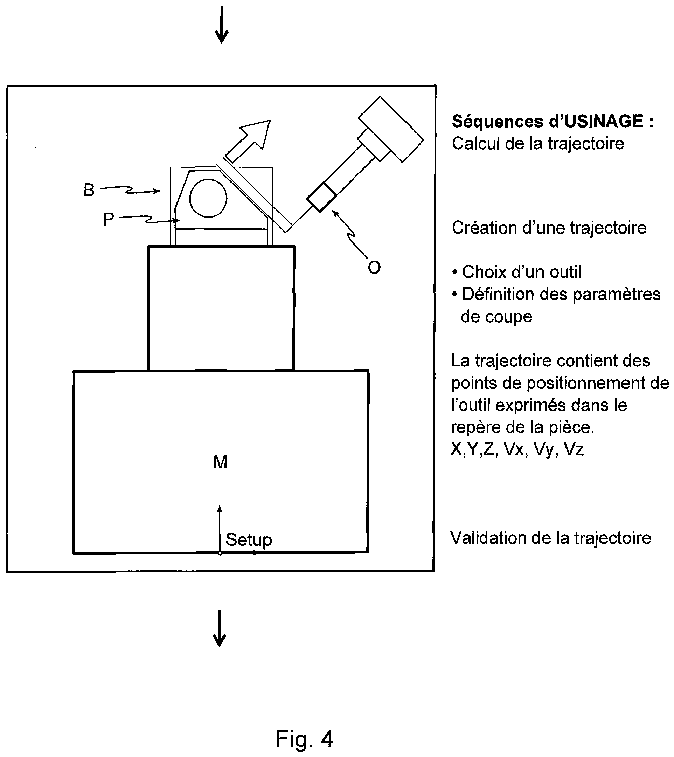

Le volume d'encombrement représentatif de l'outil d'usinage réel choisi pour l'usinage est représenté sur la figure 4, avec les volumes d'encombrement représentatifs du brut devant être usiné B, de la pièce usinée P et des moyens de maintien en position M.

Comme cela a déjà été indiqué en référence à la figure 1, l'opérateur associe à chaque entité géométrique de la pièce une stratégie d'usinage, de perçage, de surfaçage, de tournage ou autre. Chaque stratégie d'usinage est associée à un outil virtuel et à des conditions de fonctionnement dans lesquelles l'outil virtuel doit être utilisé pour couper correctement la matière du brut usiné (vitesse de coupe maximale, la profondeur de passe maximale, sa vitesse d'avance maximale...) .

A l'aide de ces éléments, un algorithme de dégénération de séquences d'usinage génère un ensemble de séquence d'usinage de la pièce à l'aide dudit au moins un outil.

Ces séquences d'usinage forment un ensemble préenregistré de séquences d' usinage, chaque séquence d' usinage étant représentative d' un déplacement attendu de l'outil réel au cours d'une partie de l'usinage d'une pièce. Comme on le comprend de la figure 4, chaque séquence d' usinage détermine un déplacement attendu de l'outil déterminé en fonction de l'outil d'usinage / de coupe choisi et en fonction des paramètres de coupe associés. Chaque déplacement attendu de l'outil est exprimé sous la forme de points de positionnement de l'outil exprimés dans le repère de la pièce X, Y, Z, Vx, Vy, Vz. L' opérateur peut visualiser le déplacement attendu de l'outil pendant la séquence d' usinage.

Comme on le voit sur la figure 2, les séquences d' usinage peuvent être générées automatiquement par l'algorithme de génération de séquences d'usinage en utilisant un programme d'usinage exécutable par un contrôleur physique. Ceci est avantageux par exemple si les séquences d'usinage qui correspondent à un programme d'usinage exécuté par un contrôleur physique d'une machine de l'atelier ont été perdues. Il suffit à l'opérateur d'éditer manuellement l'ISO typé fonctionnant sur la machine outil et de transmettre ce programme d'usinage à l'algorithme de génération de séquence d'usinage. Grâce à cet algorithme, connaissant les paramètres / formes exactes de l'outil réel on peut redéfinir chacune des séquences d'usinage et même des trajectoires de liaison utilisées par la machine outil pour relier entre elles les séquences d'usinage.

Une fois les séquences d'usinage calculées, celles-ci sont enregistrées pour former un ensemble préenregistré de séquences d'usinage.

Lors de l'étape suivante, on calcule des trajectoires de liaison, chaque trajectoire de liaison étant représentative d' un déplacement attendu de l'outil réel entre deux desdites séquences d' usinage qui se succèdent immédiatement.

Par définitions :
- Une séquence d' usinage est une séquence définissant une trajectoire attendue de l'outil réel comprend une trajectoire attendue d' entrée de l'outil réel dans de la matière du brut, une trajectoire attendue de coupe dans laquelle l'outil réel est en contact avec le brut pour lui enlever de la matière et une trajectoire attendue de sortie de l'outil réel hors de la matière du brut. Il est à noter que les trajectoires d' entrée et de sortie définissent des conditions d' entrée et sortie de l'outil.
- Une trajectoire de liaison est une trajectoire attendue de l'outil réel dans laquelle l'outil réel doit être déplacé uniquement à distance du brut, sans le toucher, la trajectoire de liaison reliant deux trajectoires attendues de l'outil réel qui sont respectivement définies par deux séquences d' usinage qui se succèdent immédiatement. Par deux séquences d' usinage qui se succèdent immédiatement on entend qu' aucune autre séquence d' usinage utilisant ledit outil réel n'est placée entre elles.

Chaque trajectoire de liaison entre deux séquences d'usinage qui se succèdent immédiatement est calculée par un algorithme de calcul de trajectoires de liaison exécuté par un processeur :
- en fonction d'une première position attendue de l'outil réel à la fin de la première de ces deux séquences d'usinage qui se succèdent immédiatement ; et
- en fonction d'une seconde position attendue de l'outil au début de la seconde de ces deux séquences d' usinage qui se succèdent immédiatement.

Puis, à *partir des séquences d'usinage et à partir des trajectoires de liaison, on génère* un parcours attendu simulé de l'outil sur l'ensemble de l'usinage.

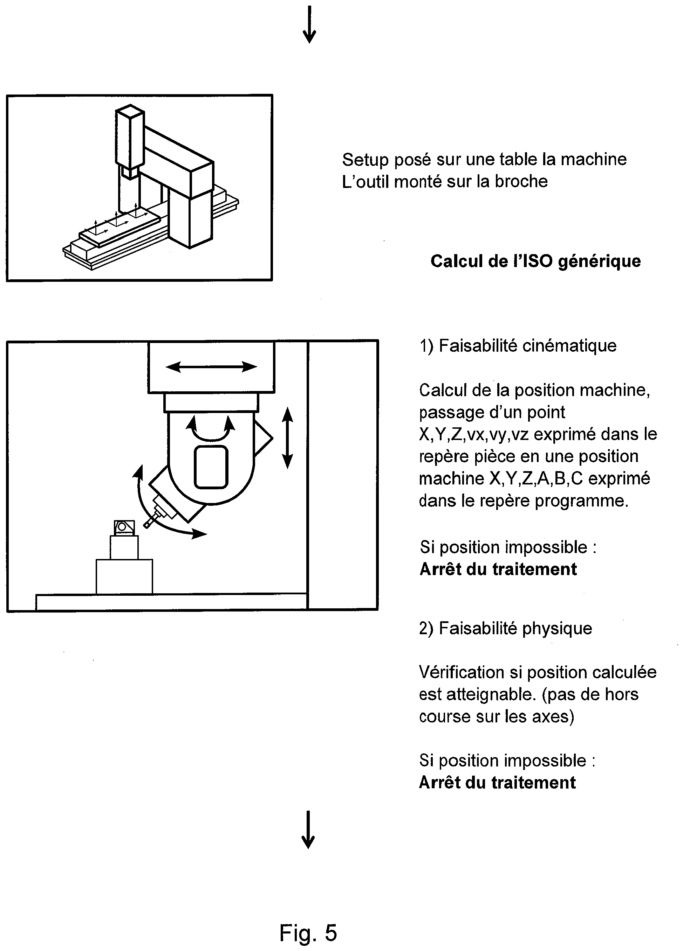

Connaissant ce parcours attendu simulé de l'outil sur l'ensemble de l'usinage il est alors possible, via une simulation présentée à la figure 5, de représenter les mouvements des parties mobiles de la machine qui sont nécessaires pour permettre le déplacement de l'outil virtuel vis-à-vis du brut à usiner.

Pour cela, on relie virtuellement d'une part l'outil virtuel représentatif de l'outil réel à une partie mobile de la machine formant le porte outil et d'autre part les moyens de maintien en position du brut réel avec une autre partie mobile de la machine supportant ces moyens de maintien. En l'occurrence, les moyens de maintien forment un montage d'usinage fixé sur une partie mobile de la machine qui forme la table.

Ayant relié l'outil et le brut aux parties mobiles de la machine, il est alors aisé de déduire les déplacements de ces parties mobiles qui sont nécessaires pour que l'outil puisse suivre le parcours attendu simulé de l'outil sur l'ensemble de l'usinage.

A cet effet, on va maintenant utiliser des paramètres machine présentés ci-après.

Comme on le voit sur la figure 2, la machine outil cible que l'on souhaite utiliser pour effectuer l'usinage est connue et représentée via d' un ensemble préenregistré de paramètres machine représentatifs de la machine-outil.

Ces paramètres machine comportent :
- un ensemble de fichiers « 3D », chaque fichier « 3D » est représentatif de volumes d'encombrement chacun représentatif d'au moins une desdites parties mobiles de la machine-outil,
- en ensemble de données « cinématique » représentatives de liaisons cinématiques entre certaines au moins desdites parties mobiles de la machine ;
- un algorithme de contrôle en écriture qui sera présenté ci-après;
- un algorithme de contrôle en lecture qui sera présenté ci-après ;
- un ensemble de données « modes interpolation » représentant les différents modes d'interpolation exécutables par la machine-outil décrite dans le « Kit machine.

Il est à noter qu'un mode d'interpolation est une règle de calcul que doit appliquer le contrôleur physique de la machine-outil pour coordonner les mouvements des parties mobiles afin de déplacer l'outil réel porté par le porte outil entre deux points. Les modes d'interpolation peuvent être par exemple le mode « plan incliné » tel que défini dans la norme ISO 6983 où le mode plan incliné est nommé « *Tilted plane working », ou le mode RTCP*, *ces modes pouvant par exemple faire appel à des options de cotations telles que cotation polaire ou cartésienne. On note que le mode RTCP pour* « Rotation Tool Center Point » est applicable sur des machines-outils dotées de tête bi-rotative ou de cinématique à plateaux. Cette fonction permet de programmer les interactions cinématiques entre les parties mobiles de la machine en se rapportant directement au centre de l'outil au lieu du centre de rotation d'axes de la cinématique machine. Le mode d'interpolation RTCP permet aussi la compensation de la longueur de l'outil dans l'espace.

En utilisant les paramètres machine issus du kit machine de la machine cible on peut calculer les *déplacements relatifs d'un ensemble de* volumes d'encombrement comprenant les volumes d'encombrement représentatifs de la machine-outil, un volume d'encombrement représentatif du porte outil, un volume d'encombrement représentatif de l'outil réel porté par le porte outil, un volume d'encombrement représentatif des moyens de maintien en position du brut réel.

C*e calcul des déplacements relatifs* de l'ensemble des volumes d' encombrement étant réalisé à partir *du parcours attendu simulé de l'outil sur l'ensemble de l'usinage, des* liaisons cinématiques entre lesdites parties mobiles de la machine et à partir d' un positionnement attendu des moyens de maintien en position du brut réel sur la partie mobile de la machine portant les moyens de maintien en position du brut réel.

Comme indiqué précédemment, le procédé de génération de programme d' usinage interprétable et exécutable par le contrôleur physique de la machine cible utilise un programme de simulation informatique pour réaliser de manière préférentiellement automatisée, des tests de faisabilité d' usinage TST illustrés à la figure 2. Le programme d' usinage est généré dans le format exécutable par ledit contrôleur physique uniquement en cas de réussite préalable des tests de faisabilité d' usinage.

Un de ces tests de faisabilité d' usinage est illustré à la figure 5. Ce test, est un test de faisabilité cinématique de l'usinage comprenant la vérification, en fonction de l'ensemble préenregistré de paramètres machine et en fonction de l'ensemble préenregistré de séquences d' usinage, de l'adaptation de la machine-outil à déplacer l'outil réel conformément à chacune des séquences d' usinage et conformément à des trajectoires de liaison.

Pour réaliser ce test, comme indiqué précédemment on calcule les déplacements des parties mobiles de la machine qui sont nécessaire pour que l'outil puisse suivre le parcours attendu simulé tout au long de l'usinage. Comme chaque partie de la machine est représentée par son volume d' encombrement il est aisé de vérifier *si au cours des* déplacements relatifs de l'ensemble des volumes d' encombrement, on constate des collisions entre certains des volumes d' encombrement de cet ensemble.

En cas de telles collisions, on considère que le test TST de faisabilité cinématique n'est pas réussi, c'est à dire que l'on considère qu' il y a échec du test de faisabilité cinématique et le programme de simulation informatique interdit alors la génération du programme d' usinage au format exécutable.

Ce test évite par exemple que l'outil n' entre en contact avec les moyens de maintien en position du brut réel au risque de casser la machine outil, l'outil réel ou le montage d' usinage formant les moyens de maintien en position. En recherchant les erreurs d' usinage avant de générer le programme d' usinage au format exécutable on gagne en temps de calcul et aussi en temps de traitement de données.

Pour cette raison et aussi par le fait qu' il réduit les risques de casse machine / casse outil, le procédé selon l'invention présente un intérêt financier certain.

Dans le cas où aucune collision n'est constatée entre les volumes d'encombrement de l'ensemble de volume d'encombrement, alors on considère qu'il y a réussite du test de faisabilité cinématique.

Parmi les tests de faisabilité d' usinage TST mis en œuvre pour conditionner la génération du programme d' usinage dans le format exécutable, on peut par exemple avoir un test de qualité attendue d' usinage comprenant :
a) la détermination d'écart entre :
   - un modèle attendu de brut B usiné déterminé en réalisant une simulation d'enlèvement de matière du brut par l'outil se déplaçant le long du parcours attendu simulé de l'outil O sur l'ensemble de l'usinage ; et
   - un modèle de pièce P à usiner généré à l'aide d'un logiciel de conception assistée par ordinateur CAO ; puis
b) si l'écart ainsi déterminé est supérieur à un écart maximum autorisé prédéterminé, alors un algorithme d'analyse d'écart génère une alerte d'échec d'un des tests TST de faisabilité d'usinage, en l'occurrence le test de qualité attendue d'usinage, et dans le cas contraire, l'algorithme d'analyse d'écart génère un signal de réussite de ce test de qualité attendue d'usinage.

Parmi les tests de faisabilité d'usinage TST mis en œuvre pour conditionner la génération du programme d'usinage dans le format exécutable, on peut aussi avoir un test de protection de l'outil d'usinage / outil de coupe consistant à générer, à partir des séquences d'usinage et à partir des trajectoires de liaison, un parcours attendu simulé de l'outil sur l'ensemble de l'usinage par rapport au brut, puis à s'assurer :
- que le parcours attendu simulé de l'outil réel est tel l'outil réel se déplaçant dans le brut ne peut se déplacer à une vitesse supérieure à une vitesse limite prédéterminée ; et/ou
- que l'outil réel déplacé suivant le parcours attendu simulé est toujours déplacé pour usiner le brut uniquement avec des arrêtes coupantes ; puis
en cas d'échec de l'une de ces conditions, le programme de simulation informatique interdit la génération du programme d'usinage dans le format exécutable par ledit contrôleur physique.

Parmi les tests de faisabilité d' usinage TST mis en œuvre pour conditionner la génération du programme d' usinage dans le format exécutable, on peut aussi mettre en œuvre un test de faisabilité physique de l'usinage. A partir de chaque déplacement attendu d' un outil réel au cours d'une partie de l'usinage de pièce, on calcule des positions extrêmes par lesquelles l'outil réel doit passer pour réaliser l'usinage, et le test de faisabilité physique de l'usinage consiste à vérifier si la machine-outil est adaptée à déplacer l'outil réel pour qu' il puisse atteindre chacune des positions extrêmes calculées.

On évite vérifie ainsi que la machine présente une course suffisante pour déplacer l'outil selon le parcours nécessaire à l'usinage de la pièce. Ce procédé permet aussi d'éviter que l'on ait des axes de mobilité de machine qui arrivent en butée de fin de course pendant l'exécution du programme par la machine outil. Comme cela est visible à la figure 5, ce test de faisabilité physique permet de vérifier si chaque positions d'outil calculées X, Y, Z Vx, Vy, Vz et exprimée dans le repère pièce peut être atteinte dans le repère propre au programme d'usinage X, Y, Z, A, B, C.

En cas d'échec d'un des tests TST de faisabilité d'usinage, le programme de simulation interdit la génération du programme d'usinage et propose éventuellement un correctif.

Typiquement, en cas d'échec des tests de faisabilité d'usinage ce programme de simulation génère une alerte.

Cette alerte générée est préférentiellement associée à un message d'alerte sélectionné dans une liste prédéterminée de messages d'alerte, le message d'alerte sélectionné indiquant une raison supposée de l'échec des tests de faisabilité d'usinage.

Le message d'alerte est affiché à l'intention d'un opérateur du programme de simulation informatique via une interface homme machine telle qu'un écran. En fonction du message d'alerte sélectionné et affiché, l'opérateur peut redéfinir des séquences d'usinage ou des formes de la pièce ou des dimensions ou positions de moyens de maintien du brut réel de pièce à usiner. Dans certains cas l'opérateur peut aussi redéfinir les trajectoires de liaison entre les séquences d'usinage ou encore décider de changer de machine-outil pour en choisir une ayant une plus grande amplitude de mouvement, c'est-à-dire des liaisons cinématiques entre les parties mobiles constitutives de la machine outil qui soient telles qu'elles sont adaptées à déplacer l'outil réel le long du parcours attendu simulé de l'outil sur l'ensemble de l'usinage sans qu'il y ait de collision entre les volumes d'encombrement représentatifs des parties de la machine. On note que dans cette simulation, les moyens de maintien d'un brut réel de pièce à usiner sont représentés par au moins un desdits volumes d'encombrement et que le porte outil est représenté par un autre desdits volumes d'encombrement.

A contrario, en cas de réussite de l'ensemble des tests de faisabilité TST, le programme de simulation informatique commande la génération du programme d'usinage dans le format exécutable par ledit contrôleur physique. Cette génération comprend :
- l'écriture, par un premier algorithme d'écriture, d'un préprogramme d'usinage dans un format générique distinct dudit format exécutable par ledit contrôleur physique ; puis
- une vérification, par un algorithme contrôleur en écriture, du préprogramme d'usinage dans le format générique, cet algorithme contrôleur en écriture vérifiant si ce préprogramme d'usinage dans le format générique est conforme à des règles linguistiques prédéterminées propres au format générique ; puis
- si l'algorithme contrôleur en écriture confirme que le préprogramme d'usinage dans le format générique est conforme aux règles linguistiques prédéterminées propres au format générique, alors ce préprogramme d'usinage dans le format générique est mémorisé pour être conservé et un second algorithme d'écriture réécrit ce préprogramme d'usinage dans le format exécutable par ledit contrôleur physique ; puis
- une vérification, par un algorithme contrôleur en lecture, du préprogramme d'usinage dans le format exécutable par ledit contrôleur physique, cet algorithme contrôleur en lecture vérifiant si ce préprogramme d'usinage dans le format exécutable par ledit contrôleur physique est conforme à des règles linguistiques prédéterminées propres au format exécutable par ledit contrôleur physique ; puis
- si l'algorithme contrôleur en lecture confirme que le préprogramme d'usinage dans le format exécutable par ledit contrôleur physique est conforme aux règles linguistiques prédéterminées propres au format exécutable par ledit contrôleur physique, alors ce préprogramme d'usinage dans le format exécutable par le contrôleur physique est considéré comme étant le programme d'usinage généré dans le format exécutable par ledit contrôleur physique, ce dernier programme étant alors enregistré pour être transmis à la machine outil pour être interprété et exécuté par son contrôleur physique.

Les règles linguistiques prédéterminées propres au format générique comportent des règles de syntaxe propres au format générique et des règles de vocabulaire propres au format générique.

Les règles linguistiques prédéterminées propres au format exécutable par le contrôleur physique comportent des règles de syntaxe propres au format exécutable par le contrôleur physique de la machine outil cible et des règles de vocabulaire propres à ce format exécutable par le contrôleur physique.

La génération et la mémorisation d'un préprogramme d'usinage dans un format générique qui est distinct du format exécutable par le contrôleur physique, permet de conserver une version intermédiaire du programme d'usinage qui peut être réutilisé pour le cas où l'on souhaiterait changer de machine outil cible. En effet, l'on change de machine outil cible, on doit alors générer un programme d'usinage spécifiquement adapté pour être exécutable par le contrôleur physique de cette nouvelle machine cible. Comme, on a une version dans un format générique non spécifique d'un seul type de contrôleur physique, on peut réécrire simplement le programme d'usinage dans le nouveau format exécutable par le nouveau contrôleur physique en utilisant uniquement le programme d'usinage dans le format générique tel qu'il a été mémorisé et un second algorithme d'écriture adapté à réécrire ce préprogramme d'usinage mémorisé dans le format générique dans le nouveau format exécutable par le nouveau contrôleur physique. Ceci est particulièrement utile pour faciliter l'adaptation du programme d'usinage d'une machine outil vers une autre machine outil sans avoir à retravailler l'ensemble des séquences d'usinage.

L'intérêt d'utiliser d'une part un algorithme contrôleur en écriture utilisant des règles linguistiques prédéterminées propres au format générique et d'autre part un algorithme contrôleur en lecture utilisant des règles linguistiques prédéterminées propres au format exécutable par le contrôleur physique de la machine outil cible permet de limiter le risque d'erreurs dans le programme exécutable transmis au contrôleur de la machine outil. En effet, le format générique est utilisé quel que soit le format exécutable cible du contrôleur physique cible. Ceci permet de tester une première fois la syntaxe du programme d'usinage alors qu'il est sous la forme d'un préprogramme au format générique et de tester une seconde fois la syntaxe de ce programme d'usinage alors qu'il est sous une forme alternative, c'est-à-dire sous la forme d'un prés programme au format exécutable par un contrôleur physique cible.

L'invention offre aux opérateurs en charge de la génération de programme d'usinage, des facilités pour la transposition d'un programme d'usinage d'une machine de l'atelier vers une autre possédant des contrôleurs physiques différents l'un de l'autre.

Un avantage de l'invention est de permettre la génération de programme d'usinage vers de multiples machines outil ayant chacune son propre contrôleur physique.

Un autre avantage de l'invention est de permettre de générer ce programme à partir de multiples données exprimées dans différents formats ce qui rend le procédé extrêmement adaptable au contexte industriels particuliers.

Par exemple, l'ensemble préenregistré de séquences d'usinage peut comprendre :
- des séquences d'usinage exprimées sous forme de programme de machine outil à commande numérique en code G ; ou
- des séquences d'usinage issues d'un logiciel de fabrication assistée par ordinateur ; ou
- des séquences d'usinage exprimées sous formes de trajectoires d'outil d'usinage ; ou
- une combinaison de séquences d'usinage en code G, de séquences issues d'un logiciel de fabrication assistée par ordinateur, et de séquences exprimées sous forme de trajectoires de l'outil d'usinage.

Par programme en code G, on entend un programme de machine outil à commande numérique conforme à la norme ISO 6983.

Par séquences d'usinage issues d'un logiciel de fabrication assistée par ordinateur, on peut entendre des séquences en format neutre de type .cl ou .apt.

## Revendications

1. Procédé de génération d'un programme d'usinage interprétable par un contrôleur physique d'une machine-outil à commande numérique, cette machine-outil comprenant plusieurs parties mobiles les unes par rapport aux autres de manière à déplacer un outil réel vis-à-vis d'un brut réel de pièce à usiner, l'outil réel étant porté par une des parties mobiles et le brut réel par une autre des parties mobiles via des moyens de maintien en position du brut réel, le procédé de génération de programme d'usinage étant essentiellement **caractérisé en ce que** le programme d'usinage est généré à partir :
- d'un ensemble préenregistré de paramètres machine représentatifs de la machine-outil, certains de ces paramètres machine étant représentatifs de volumes d'encombrement chacun représentatif d'au moins une desdites parties mobiles de la machine-outil et d'autres paramètres machine étant représentatifs de liaisons cinématiques entre certaines au moins desdites parties mobiles de la machine ; et
- d'un ensemble préenregistré de séquences d'usinage, chaque séquence d'usinage étant représentative d'un déplacement attendu de l'outil réel au cours d'une partie de l'usinage d'une pièce ;
- à partir de certains au moins desdits paramètres machine et de certaines au moins des séquences d'usinage, un programme de simulation informatique, réalise des tests de faisabilité (TST) d'usinage, le programme d'usinage étant généré dans un format exécutable par ledit contrôleur physique uniquement en cas de réussite préalable des tests de faisabilité d'usinage, et l'un des tests de faisabilité d'usinage étant un test de faisabilité cinématique de l'usinage comprenant la vérification, en fonction de l'ensemble préenregistré de paramètres machine et en fonction de l'ensemble préenregistré de séquences d'usinage, de l'adaptation de la machine-outil à déplacer l'outil réel conformément à chacune des séquences d'usinage et conformément à des trajectoires de liaison, chaque trajectoire de liaison étant représentative d'un déplacement attendu de l'outil réel entre deux desdites séquences d'usinage qui se succèdent immédiatement.

2. Procédé de génération d'un programme d'usinage selon la revendication 1, dans lequel le test de faisabilité cinématique comprend :
- 1) la génération, à partir des séquences d'usinage et à partir des trajectoires de liaison, d'un parcours attendu simulé de l'outil sur l'ensemble de l'usinage ;
- 2) le calcul des déplacements relatifs d'un ensemble de volumes d'encombrement comprenant les volumes d'encombrement représentatifs de la machine-outil, un volume d'encombrement représentatif du porte outil, un volume d'encombrement représentatif de l'outil réel porté par le porte outil, un volume d'encombrement représentatif des moyens de maintien en position du brut réel, ce calcul des déplacements relatifs de l'ensemble des volumes d'encombrement étant réalisé à partir du parcours attendu simulé de l'outil sur l'ensemble de l'usinage, des liaisons cinématiques entre lesdites parties mobiles de la machine et à partir d'un positionnement attendu des moyens de maintien en position du brut réel sur la partie mobile de la machine portant les moyens de maintien en position du brut réel ;
- 3) si au cours des déplacements relatifs de l'ensemble des volumes d'encombrement on constate des collisions entre certains des volumes d'encombrement de cet ensemble alors on considère que le test de faisabilité cinématique n'est pas réussi, c'est à dire que l'on considère qu'il y a échec du test de faisabilité cinématique et le programme de simulation informatique interdit alors la génération du programme d'usinage au format exécutable ;
- 4) dans le cas où aucune collision n'est constatée entre les volumes d'encombrement de l'ensemble de volume d'encombrement, alors on considère qu'il y a réussite du test de faisabilité cinématique.

3. Procédé de génération d'un programme d'usinage selon la revendication 1, dans lequel chaque trajectoire de liaison entre deux desdites séquences d'usinage qui se succèdent immédiatement est calculée par un algorithme de calcul de trajectoires de liaison exécuté par un processeur :
- en fonction d'une première position attendue de l'outil réel à la fin de la première de ces deux séquences d'usinage qui se succèdent immédiatement ; et
- en fonction d'une seconde position attendue de l'outil au début de la seconde de ces deux séquences d'usinage qui se succèdent immédiatement.

4. Procédé de génération d'un programme d'usinage selon la revendication 1, dans lequel l'un des tests de faisabilité d'usinage est un test de qualité attendue d'usinage comprenant :
a) la détermination d'écart entre :
- un modèle attendu de brut usiné déterminé en réalisant une simulation d'enlèvement de matière du brut par l'outil se déplaçant le long du parcours attendu simulé de l'outil sur l'ensemble de l'usinage ; et
- un modèle de pièce à usiner généré à l'aide d'un logiciel de conception assistée par ordinateur ; puis
b) si l'écart ainsi déterminé est supérieur à un écart maximum autorisé prédéterminé alors un algorithme d'analyse d'écart génère une alerte d'échec d'un des tests de faisabilité d'usinage, en l'occurrence le test de qualité attendue d'usinage, et dans le cas contraire, l'algorithme d'analyse d'écart génère un signal de réussite de ce test de qualité attendue d'usinage.

5. Procédé de génération d'un programme d'usinage selon la revendication 1, dans lequel l'un des tests de faisabilité d'usinage est un test de protection de l'outil de coupe consistant à générer, à partir des séquences d'usinage et à partir des trajectoires de liaison, un parcours attendu simulé de l'outil sur l'ensemble de l'usinage par rapport au brut, puis à s'assurer :
- que le parcours attendu simulé de l'outil réel est tel l'outil réel se déplaçant dans le brut ne peut se déplacer à une vitesse supérieure à une vitesse limite prédéterminée ; et/ou
- que l'outil réel déplacé suivant le parcours attendu simulé est toujours déplacé pour usiner le brut uniquement avec des arrêtes coupantes ; puis
en cas d'échec de l'une de ces conditions, le programme de simulation informatique interdit la génération du programme d'usinage dans le format exécutable par ledit contrôleur physique.

6. Procédé de génération d'un programme d'usinage selon l'une quelconque des revendications 1 à 4, dans lequel à partir de chaque déplacement attendu d'un outil réel au cours d'une partie de l'usinage d'une pièce, on calcule des positions extrêmes par lesquelles l'outil réel doit passer pour réaliser l'usinage, et un des tests de faisabilité d'usinage est un test de faisabilité physique de l'usinage consistant à vérifier si la machine-outil est adaptée à déplacer l'outil réel pour qu'il puisse atteindre chacune des positions extrêmes calculées.

7. Procédé de génération d'un programme d'usinage selon l'une quelconque des revendications 1 à 6, dans lequel en cas d'échec des tests de faisabilité d'usinage on génère une alerte.

8. Procédé de génération d'un programme d'usinage selon la revendication 7, dans lequel l'alerte générée est associée à un message d'alerte sélectionné dans une liste prédéterminée de messages d'alerte, le message d'alerte sélectionné indiquant une raison supposée de l'échec des tests de faisabilité d'usinage.

9. Procédé de génération d'un programme d'usinage selon l'une quelconque des revendications précédentes dans lequel ladite génération du programme d'usinage dans le format exécutable par ledit contrôleur physique comprend :
- l'écriture, par un premier algorithme d'écriture, d'un préprogramme d'usinage dans un format générique distinct dudit format exécutable par ledit contrôleur physique ; puis
- une vérification, par un algorithme contrôleur en écriture, du préprogramme d'usinage dans le format générique, cet algorithme contrôleur en écriture vérifiant si ce préprogramme d'usinage dans le format générique est conforme à des règles linguistiques prédéterminées propres au format générique ; puis
- si l'algorithme contrôleur en écriture confirme que le préprogramme d'usinage dans le format générique est conforme aux règles linguistiques prédéterminées propres au format générique, alors ce préprogramme d'usinage dans le format générique est mémorisé pour être conservé et un second algorithme d'écriture réécrit ce préprogramme d'usinage dans le format exécutable par ledit contrôleur physique ; puis
- une vérification, par un algorithme contrôleur en lecture, du préprogramme d'usinage dans le format exécutable par ledit contrôleur physique, cet algorithme contrôleur en lecture vérifiant si ce préprogramme d'usinage dans le format exécutable par ledit contrôleur physique est conforme à des règles linguistiques prédéterminées propres au format exécutable par ledit contrôleur physique ; puis
- si l'algorithme contrôleur en lecture confirme que le préprogramme d'usinage dans le format exécutable par ledit contrôleur physique est conforme aux règles linguistiques prédéterminées propres au format exécutable par ledit contrôleur physique, alors ce préprogramme d'usinage dans le format exécutable par le contrôleur physique est considéré comme étant le programme d'usinage généré dans le format exécutable par ledit contrôleur physique, ce dernier programme étant alors enregistré pour être transmis à la machine outil pour être interprété et exécuté par son contrôleur physique.

10. Procédé de génération d'un programme d'usinage selon l'une quelconque des revendications précédentes, dans lequel l'ensemble préenregistré de séquences d'usinage comprend :
- des séquences d'usinage exprimées sous forme de programme de machine outil à commande numérique en code G ; ou
- des séquences d'usinage issues d'un logiciel de fabrication assistée par ordinateur ; ou
- des séquences d'usinage exprimées sous formes de trajectoires d'outil d'usinage ; ou
- une combinaison de séquences d'usinage en code G, de séquences issues d'un logiciel de fabrication assistée par ordinateur, et de séquences exprimées sous forme de trajectoires de l'outil d'usinage.

## Patentansprüche

1. Verfahren zum Erzeugen eines Bearbeitungsprogramms, das von einer physikalischen Steuerung einer numerisch gesteuerten Werkzeugmaschine interpretierbar ist, wobei diese Werkzeugmaschine mehrere zueinander bewegliche Teile umfasst, um ein reales Werkzeug gegenüber einem realen Werkstückrohling zu verschieben, wobei das reale Werkzeug von einem der beweglichen Teile getragen wird und der reale Rohling von einem anderen der beweglichen Teile über Positionshaltemittel zum Halten der Position des realen Rohlings getragen wird, wobei das Verfahren zum Erzeugen eines Bearbeitungsprogramms im Wesentlichen **dadurch gekennzeichnet ist, dass** das Bearbeitungsprogramm erzeugt wird anhand:
- eines vorab gespeicherten Satzes von Maschinenparametern, die repräsentativ für die Werkzeugmaschine sind, wobei einige dieser Maschinenparameter repräsentativ für Raumvolumen sind, die jeweils repräsentativ für mindestens eines der genannten beweglichen Teile der Werkzeugmaschine sind, und andere Maschinenparameter repräsentativ für kinematische Verbindungen zwischen mindestens einigen der genannten beweglichen Teile der Maschine sind; und
- eines vorab gespeicherten Satzes von Bearbeitungssequenzen, wobei jede Bearbeitungssequenz repräsentativ für eine erwartete Verschiebung des realen Werkzeugs während eines Teils der Bearbeitung eines Werkstücks ist;
- wobei anhand zumindest einiger der genannten Maschinenparameter und zumindest einiger der Bearbeitungssequenzen ein Computersimulationsprogramm Bearbeitungsmachbarkeitstests (TST) durchführt, wobei das Bearbeitungsprogramm nur im Falle eines vorherigen Bestehens der Bearbeitungsmachbarkeitstests in einem von der genannten physikalischen Steuerung ausführbaren Format erzeugt wird, und wobei einer der Bearbeitungsmachbarkeitstests ein Test einer kinematischen Machbarkeit der Bearbeitung ist, der in Abhängigkeit von dem vorab gespeicherten Satz von Maschinenparametern und in Abhängigkeit von dem vorab gespeicherten Satz von Bearbeitungssequenzen verifiziert, dass die Werkzeugmaschine geeignet ist, das reale Werkzeug gemäß jeder der Bearbeitungssequenzen und gemäß den Verbindungsbahnen zu verschieben, wobei jede Verbindungsbahn repräsentativ für eine erwartete Verschiebung des realen Werkzeugs zwischen zwei der genannten Bearbeitungssequenzen ist, die unmittelbar aufeinanderfolgen.

2. Verfahren zum Erzeugen eines Bearbeitungsprogramms nach Anspruch 1, bei dem der Test der kinematischen Machbarkeit umfasst:
- 1) die Erzeugung, anhand der Bearbeitungssequenzen und anhand der Verbindungsbahnen, einer simulierten erwarteten Strecke des Werkzeugs während der gesamten Bearbeitung;
- 2) die Berechnung der relativen Verschiebungen eines Satzes von Raumvolumen, die die Raumvolumen umfassen, die repräsentativ für die Werkzeugmaschine sind, ein Raumvolumen, das repräsentativ für den Werkzeugträger ist, ein Raumvolumen, das repräsentativ für das reale Werkzeug ist, das von dem Werkzeugträger getragen wird, ein Raumvolumen, das repräsentativ für die Positionshaltemittel zum Halten der Position des realen Rohlings ist, wobei diese Berechnung der relativen Verschiebungen des Satzes der Raumvolumen anhand der simulierten erwarteten Strecke des Werkzeugs während der gesamten Bearbeitung, der kinematischen Verbindungen zwischen den genannten beweglichen Teilen der Maschine und anhand einer erwarteten Positionierung der Positionshaltemittel zum Halten der Position des realen Rohlings auf dem beweglichen Teil der Maschine, die die Positionshaltemittel für den realen Rohling trägt, erfolgt;
- 3) wenn während der relativen Verschiebungen des Satzes von Raumvolumen Kollisionen zwischen einigen der Raumvolumen dieses Satzes festgestellt werden, man dann der Ansicht ist, dass der Test der kinematischen Machbarkeit nicht bestanden wurde, das heißt, dass man der Ansicht ist, dass ein Nichtbestehen des Tests der kinematischen Machbarkeit vorliegt und das Computersimulationsprogramm dann die Erzeugung des Bearbeitungsprogramms im ausführbaren Format verhindert;
- 4) in dem Fall, in dem keine Kollision zwischen den Raumvolumen des Satzes von Raumvolumen festgestellt wird, dann der Test der kinematischen Machbarkeit als bestanden gilt.

3. Verfahren zum Erzeugen eines Bearbeitungsprogramms nach Anspruch 1, bei dem jede Verbindungsbahn zwischen zwei der genannten Bearbeitungssequenzen, die unmittelbar aufeinanderfolgen, durch einen Verbindungsbahnberechnungsalgorithmus berechnet wird, der von einem Prozessor ausgeführt wird:
- in Abhängigkeit von einer erwarteten ersten Position des realen Werkzeugs am Ende der ersten dieser beiden Bearbeitungssequenzen, die unmittelbar aufeinanderfolgen; und
- in Abhängigkeit von einer erwarteten zweiten Position des Werkzeugs zu Beginn der zweiten dieser beiden Bearbeitungssequenzen, die unmittelbar aufeinanderfolgen.

4. Verfahren zum Erzeugen eines Bearbeitungsprogramms nach Anspruch 1, bei dem einer der Bearbeitungsmachbarkeitstests ein Test der erwarteten Qualität der Bearbeitung ist, umfassend:
a) die Bestimmung einer Abweichung zwischen:
- einem erwarteten Modell des bearbeiteten Rohlings, das bestimmt wird, indem eine Simulation eines Entfernens von Material von dem Rohling durch das Werkzeug erfolgt, das sich entlang der simulierten erwarteten Strecke des Werkzeugs während der gesamten Bearbeitung verschiebt; und
- einem Modell eines Werkstücks, das mittels einer rechnergestützten Entwurfssoftware erzeugt wird; und dann
b) wenn die so bestimmte Abweichung größer als eine vorbestimmte zugelassene maximale Abweichung ist, ein Abweichungsanalysealgorithmus einen Alarm eines Nichtbestehens eines der Bearbeitungsmachbarkeitstests, im vorliegenden Fall des Tests der erwarteten Qualität der Bearbeitung, erzeugt, und im anderen Fall der Abweichungsanalysealgorithmus ein Signal für das Bestehen dieses Tests der erwarteten Qualität der Bearbeitung erzeugt.

5. Verfahren zum Erzeugen eines Bearbeitungsprogramms nach Anspruch 1, bei dem einer der Bearbeitungsmachbarkeitstests ein Test zum Schutz des Schneidwerkzeugs ist, der darin besteht, anhand der Bearbeitungssequenzen und anhand der Verbindungsbahnen eine simulierte erwartete Strecke des Werkzeugs über die gesamte Bearbeitung in Bezug auf den Rohling zu erzeugen, und dann darin sicherzustellen:
- dass die simulierte erwartete Strecke des realen Werkzeugs derart ist, dass sich das reale Werkzeug, das sich in dem Rohling verschiebt, nicht mit einer Geschwindigkeit verschieben kann, die höher als eine vorbestimmte Grenzgeschwindigkeit ist; und/oder
dass das reale Werkzeug, das gemäß der simulierten erwarteten Strecke verschoben wird, immer derart verschoben wird, dass der Rohling einzig mit Schneidkanten verschoben wird; und dann im Falle eines Nichterfüllens einer dieser Bedingungen das Computersimulationsprogramm die Erzeugung des Bearbeitungsprogramms in dem von der physikalischen Steuerung ausführbaren Format verhindert.

6. Verfahren zum Erzeugen eines Bearbeitungsprogramms nach einem der Ansprüche 1 bis 4, bei dem anhand jeder erwarteten Verschiebung eines realen Werkzeugs während eines Teils der Bearbeitung eines Werkstücks Endpositionen berechnet werden, durch die das reale Werkzeug hindurchgehen muss, um die Bearbeitung durchzuführen, und einer der Bearbeitungsmachbarkeitstests ein physikalischer Bearbeitungsmachbarkeitstest ist, der darin besteht, zu verifizieren, ob die Werkzeugmaschine dazu geeignet ist, das reale Werkzeug derart zu verschieben, dass es jede der berechneten Endpositionen erreichen kann.

7. Verfahren zum Erzeugen eines Bearbeitungsprogramms nach einem der Ansprüche 1 bis 6, bei dem im Falle eines Nichtbestehens der Bearbeitungsmachbarkeitstests ein Alarm erzeugt wird.

8. Verfahren zum Erzeugen eines Bearbeitungsprogramms nach Anspruch 7, bei dem der erzeugte Alarm mit einer Alarmnachricht verknüpft ist, die aus einer vorbestimmten Liste von Alarmnachrichten ausgewählt wird, wobei die ausgewählte Alarmnachricht einen angenommenen Grund für das Nichtbestehen der Bearbeitungsmachbarkeitstests angibt.

9. Verfahren zum Erzeugen eines Bearbeitungsprogramms nach einem der vorhergehenden Ansprüche, bei dem die genannte Erzeugung des Bearbeitungsprogramms in dem von der genannten physikalischen Steuerung ausführbaren Format umfasst:
- das Schreiben unter Verwendung eines ersten Schreibalgorithmus eines Bearbeitungsvorprogramms in einem generischen Format, das sich von dem genannten von der physikalischen Steuerung ausführbaren Format unterscheidet; und dann
- eine Verifizierung unter Verwendung eines Schreibsteuerungsalgorithmus des Bearbeitungsvorprogramms in dem generischen Format, wobei dieser Schreibsteuerungsalgorithmus verifiziert, ob dieses Bearbeitungsvorprogramm in dem generischen Format konform mit vorbestimmten linguistischen Regeln ist, die dem generischen Format zu eigen sind; und daraufhin
- wenn der Schreibsteuerungsalgorithmus bestätigt, dass das Bearbeitungsvorprogramm in dem generischen Format konform mit den vorbestimmten linguistischen Regeln ist, die dem generischen Format zu eigen sind, dann dieses Bearbeitungsvorprogramm in dem generischen Format gespeichert wird, um beibehalten zu werden, und ein zweiter Schreibalgorithmus dieses Bearbeitungsvorprogramm erneut in dem von der genannten physikalischen Steuerung ausführbaren Format schreibt; und dann
eine Verifizierung unter Verwendung eines Lesesteuerungsalgorithmus des Bearbeitungsvorprogramms in dem von der physikalischen Steuerung ausführbaren Format, wobei dieser Lesesteuerungsalgorithmus verifiziert, ob dieses Bearbeitungsvorprogramm in dem von der physikalischen Steuerung ausführbaren Format konform mit vorbestimmten linguistischen Regeln ist, die dem von der physikalischen Steuerung ausführbaren Format zu eigen sind; und dann
- wenn der Lesesteuerungsalgorithmus bestätigt, dass das Bearbeitungsvorprogramm in dem von der genannten physikalischen Steuerung ausführbaren Format konform mit den vorbestimmten linguistischen Regeln ist, die dem von der genannten physikalischen Steuerung ausführbaren Format zu eigen sind, dann dieses Bearbeitungsvorprogramm in dem von der physikalischen Steuerung ausführbaren Format als das Bearbeitungsprogramm angesehen wird, das in dem von der physikalischen Steuerung ausführbaren Format erzeugt wird, wobei dieses letzte Programm dann gespeichert wird, um an die Werkzeugmaschine übertagen zu werden, um von deren physikalischer Steuerung interpretiert und ausgeführt zu werden.

10. Verfahren zum Erzeugen eines Bearbeitungsprogramms nach einem der vorhergehenden Ansprüche, bei dem der vorab gespeicherte Satz von Bearbeitungssequenzen umfasst:
- Bearbeitungssequenzen, die in Form eines Programms für eine numerisch gesteuerte Werkzeugmaschine im G-Code ausgedrückt werden; oder
- Bearbeitungssequenzen, die von einer rechnerunterstützten Fertigungssoftware stammen; oder
- Bearbeitungssequenzen, die in Form von Bearbeitungswerkzeugbahnen ausgedrückt werden; oder
- eine Kombination aus Bearbeitungssequenzen im G-Code, Sequenzen, die von einer rechnerunterstützten Fertigungssoftware stammen, und Sequenzen, die in Form von Bearbeitungswerkzeugbahnen ausgedrückt werden.

## Claims

1. Method of generating a machining program that can be interpreted by a physical controller of a numerical control machine tool, this machine tool comprising several moving parts able to move relative to one another so as to move an actual tool with respect to an actual workpiece that is the starting point for a component that is to be machined, the actual tool being borne by one of the moving parts and the actual workpiece by another of the moving parts via means for holding the actual workpiece in position, the method of generating a machining program being essentially **characterized in that** the machining program is generated from:
- a prerecorded set of machine parameters representative of the machine tool, some of these machine parameters being representative of space volumes each one representative of at least one of the said moving parts of the machine tool and other machine parameters being representative of kinematic links between at least some of the said moving parts of the machine; and
- a prerecorded set of machining sequences, each machining sequence being representative of an expected movement of the actual tool during part of the machining of a component;
on the basis of at least some of the said machine parameters and of at least some of the machining sequences, a computer simulation program carries out machining feasibility tests (TST), the machining program being generated in a format that can be executed by the said physical controller only if it passes the machining feasibility tests beforehand, and one of the machining feasibility tests is a test on the kinematic feasibility of the machining that involves checking, as a function of the prerecorded set of machine parameters and as a function of the prerecorded set of machining sequences, that the machine tool is capable of moving the actual tool in accordance with each of the machining sequences and in accordance with link paths, each link path being representative of an expected movement of the actual tool between two of the said machining sequences that immediately succeed one another.

2. Method of generating a machining program according to Claim 1, in which the kinematic feasibility test involves:
- 1) generating, from the machining sequences and from the link paths, a simulated expected route of the tool throughout the machining;
- 2) calculating the relative movements of a set of space volumes comprising the space volumes representative of the machine tool, a space volume representative of the tool holder, a space volume representative of the actual tool borne by the tool holder, a space volume representative of the means of holding the actual workpiece in position, this calculation of the relative movements of all of the space volumes being carried out on the basis of the simulated expected route of the tool throughout the machining, of the kinematic links between the said moving parts of the machine and from an expected positioning of the means that hold the actual workpiece in position on the moving part of the machine bearing the means for holding the actual workpiece in position;
- 3) if, during the relative movements of all the space volumes, it is found that there are collisions between some of the space volumes of this set then it is considered that the kinematic feasibility test has not been passed, which means to say that it is considered that the kinematic feasibility test has been failed and the computer simulation program therefore prevents the generation of the machining program in the executable format;
- 4) if there is not found to be any collision between the space volumes of the set of space volumes then the kinematic feasibility test is considered to have been passed.

3. Method of generating a machining program according to Claim 1, in which each link path linking two of the said machining sequences that immediately succeed one another is calculated by a link path calculating algorithm executed by a processor:
- as a function of an expected first position of the actual tool at the end of the first of these two machining sequences that immediately succeed one another; and
- as a function of an expected second position of the tool at the start of the second of these two machining sequences that immediately succeed one another.

4. Method of generating a machining program according to Claim 1, in which one of the machining feasibility tests is a test on the expected machining quality, involving:
a) determining a deviation between:
- an expected model of the machined workpiece which is determined by carrying out a simulation of the removal of material from the workpiece by the tool moving along the simulated expected route of the tool throughout the machining; and
- a model of a component that is to be machined, which model is generated using computer aided design software; then
b) if the deviation thus determined is greater than a predetermined authorized maximum deviation then a deviation analysis algorithm generates an alert that one of the machining feasibility tests, in this instance the expected machining quality test, has been failed, and if not, the deviation analysis algorithm generates a signal that this expected machining quality test has been passed.

5. Method of generating a machining program according to Claim 1, in which one of the machining feasibility tests is a test of protecting the cutting tool and involving generating, from the machining sequences and from the link paths, a simulated expected route of the tool throughout the machining with respect to the workpiece and then in ensuring:
- that the simulated expected route of the actual tool is such that the actual tool moving through the workpiece cannot move at a speed higher than a predetermined limit speed; and/or
- that the actual tool moved along the simulated expected route is always moved in such a way as to machine the workpiece only using cutting edges; then
if one of these conditions is failed, the computer simulation program prevents the generation of the machining program in the format executable by the said physical controller.

6. Method of generating a machining program according to any one of Claims 1 to 4, in which, on the basis of each expected movement of an actual tool during part of the machining of a component, extreme positions through which the actual tool needs to pass in order to perform the machining are calculated and one of the machining feasibility tests is a test on the physical feasibility of the machining that involves checking whether the machine tool is capable of moving the actual tool in such a way that it can achieve each of the calculated extreme positions.

7. Method of generating a machining program according to any one of Claims 1 to 6, in which an alert is generated if a machining feasibility test is failed.

8. Method of generating a machining program according to Claim 7, in which the alert generated is associated with an alert message selected from a predetermined list of alert messages, the alert message selected indicating an assumed reason for the failure of the machining feasibility tests.

9. Method of generating a machining program according to any one of the preceding claims, in which the said generation of the machining program in the format executable by the said physical controller involves:
- writing, using a first writing algorithm, a machining preprogram in a generic format distinct from the said format executable by the said physical controller; then
- checking, by a writing controller algorithm, the machining preprogram in the generic format, this writing controller algorithm checking whether this machining preprogram in the generic format conforms to predetermined linguistic rules specific to the generic format; then
- if the writing controller algorithm confirms that the machining preprogram in the generic format conforms to the predetermined linguistic rules specific to the generic format then this machining preprogram in the generic format is stored in memory so that it can be kept and a second writing algorithm rewrites this machining preprogram in the format executable by the said physical controller; then
- checking, by a reading controller algorithm, the machining preprogram in the format executable by the said physical controller, this reading controller algorithm checking whether this machining preprogram in the format executable by the said physical controller conforms to predetermined linguistic rules specific to the format executable by the said physical controller; then
- if the reading controller algorithm confirms that the machining preprogram in the format executable by the said physical controller conforms to the predetermined linguistic rules specific to the format executable by the said physical controller, then this machining preprogram in the format executable by the physical controller is considered to be the machining program generated in the format executable by the said physical controller, this latter program then being recorded so that it can be transmitted to the machine tool to be interpreted and executed by the physical controller thereof.

10. Method of generating a machining program according to any one of the preceding claims, in which the prerecorded set of machining sequences comprises:
- machining sequences expressed in the form of a numerical control machine tool program in G code; or
- machining sequences originating from computer aided manufacturing software; or
- machining sequences expressed in the form of machining tool paths; or
- a combination of G-code machining sequences, sequences originating from computer aided manufacturing software and sequences expressed in the form of machining tool paths.
